# EUROPÄISCHE PATENTSCHRIFT

(11) **EP 1 335 140 B1**
(45) Veröffentlichungstag und Bekanntmachung des Hinweises auf die Patenterteilung: **08.09.2004**
(21) Anmeldenummer: 03000895.7
(22) Anmeldetag: 16.01.2003
(51) Int. Cl.: F16B 13/06

(54) **Spreizdübel**
Expanding dowel
Cheville expansible

(30) Priorität: 07.02.2002 IT PD20020029
(43) Veröffentlichungstag der Anmeldung: 13.08.2003
(73) Patentinhaber: Fischerwerke Artur Fischer GmbH & Co. KG, 72178 Waldachtal (DE)
(72) Erfinder: Buso, Giuliano, 35020 Saonara (PD) (IT)

(56) Entgegenhaltungen:
- FR-A- 2 167 419
- US-A- 3 202 034
- US-A- 5 352 066

## Beschreibung

Die vorliegende Erfindung betrifft einen Spreizdübel mit den Merkmalen des Oberbegriffs des Anspruchs 1 (FR 2167419 A).

Bekanntlich gibt es zahlreiche Arten von Dübeln, die auf dem Prinzip beruhen, eine Hülse zu veranlassen, sich im Inneren eines zuvor ausgebildeten Bohrlochs derart auszudehnen, dass sich die Hülse in dem Objekt verankert.

Was die Materialien betrifft, so gibt es auch in diesem Fall verschiedene Anwendungsformen, und insbesondere gibt es Dübel, deren Hülse aus Metall besteht, sowie Dübel aus Kunststoff.

Unter den erstgenannten Dübeln ist ein Dübel besonders verbreitet, der eine zylindrische Hülse mit axialer Bohrung zum Einführen einer Schraube hat.

Die Hülse ist in Abschnitte unterteilt, die aufgrund von Schlitzen spreizbar sind, welche sich im wesentlichen auf die gesamte Länge der Hülse erstrecken.

An dem Ende der Hülse, das dem Einführende für die Schraube abgewandt ist, ist ein im wesentlichen kegelstumpfförmiges Spreizelement an der Hülse befestigt, das eine axial verlaufende Gewindebohrung für den Eingriff mit der Schraube und einander gegenüberstehende Keile hat, die in entsprechende erweiterte Bereiche des Schlitzes eingeführt sind.

In der praktischen Anwendung wird durch das Einschrauben der Schraube in das Spreizelement, für das die Keile Elemente zum Verhindern einer Rotation und zum Koppeln (um einen Verlust zu vermeiden) bilden, sichergestellt, dass das Spreizelement selbst, unterstützt durch das Eindringen der Keile in den Schlitz, die Abschnitte der Hülse spreizt und so die Verankerung in dem Bohrloch herstellt.

Zwar sind diese Dübel schon seit vielen Jahren auf dem Markt und werden von den Kunden geschätzt, doch besteht die Gefahr, dass in Ausnahmesituationen das Spreizelement gegen den ungeschlitzten Teil der Hülse stößt, welcher sich nicht spreizt, was zu einer ungenügenden Verankerung des Dübels in dem Bohrloch führt.

Die Hauptaufgabe der vorliegenden Erfindung besteht daher darin, einen Spreizdübel der oben beschriebenen Art mit gesteigerter Verlässlichkeit anzugeben, der die Gefahr ausbleibender Spreizung der Hülse beseitigt und der, wenn er mit den Wänden des Bohrlochs in Kontakt kommt, mit dem Druck aus der Spreizung viel tiefere Bereiche erreicht als bekannte Dübel und somit einen besseren Halt bietet.

Eine weitere Aufgabe ist es, einen Dübel anzugeben, der im Hinblick auf seine Herstellung vorteilhaft ist, insbesondere was den Zusammenbau der Teile betrifft, sei er manuell oder automatisch.

Schließlich ist ein Dübel anzugeben, der zu wettbewerbsfähigen Kosten hergestellt werden kann.

Diese und andere Aufgaben, die im folgenden deutlicher werden, löst ein Spreizdübel, der eine Hülse aus Metall mit axialer Bohrung zum Einführen einer Schraube hat, wobei die Hülse in spreizbare Abschnitte mit Längsschlitzen unterteilt ist und wobei in das dem Ende zum Einführen der Schraube in die Hülse abgewandte Ende ein im wesentlichen kegelstumpfförmiges Spreizelement mit axialer Gewindebohrung für den Eingriff mit der Schraube teilweise eingeführt ist, wobei das Spreizelement ein ringförmiges Band hat, in dem eine Zahnung sowie eine Schulter ausgebildet sind, mit denen gebogene Flügel in Eingriff kommen, die an der Hülse an den Enden der Schlitze ausgebildet sind, wobei der Eingriff in die Vertiefungen der Zahnung und mit der Schulter die Funktion hat, eine Rotation zu verhindern und eine axiale Kopplung gegen Verlieren herzustellen.

Weitere Eigenschaften und Vorteile der Erfindung ergeben größtenteils sich aus der ausführlichen Beschreibung eines bevorzugten Ausführungsbeispiels der Erfindung, das als nicht einschränkendes Beispiel in den zugehörigen Zeichnungen dargestellt ist, in denen zeigen:

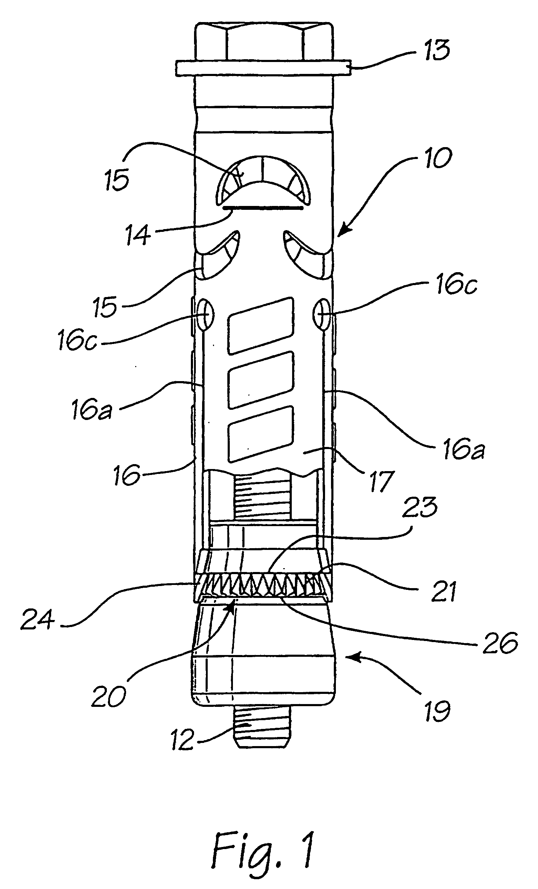

- Figur 1: eine Seitenansicht des Dübels, teilweise im Schnitt dargestelle;

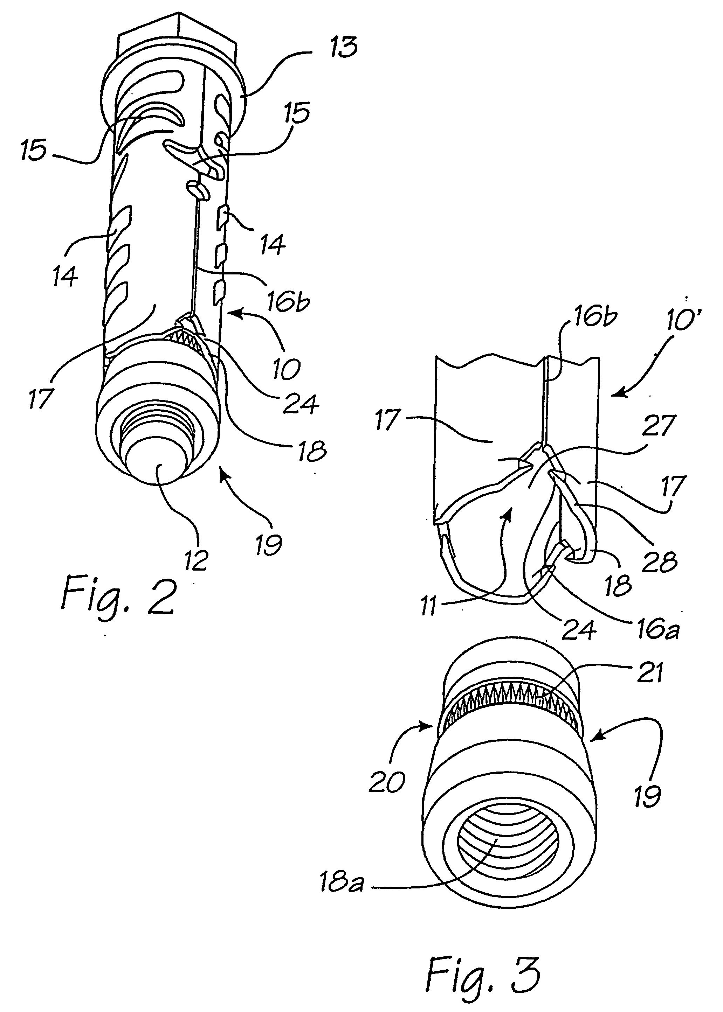

- Figur 2: eine perspektivische Ansicht des Dübels;
- Figur 3: eine vergrößerte perspektivische Explosionsdarstellung eines Details, welche den Verbindungsbereich zwischen der Dübelhülse und dem Spreizelement zeigt;

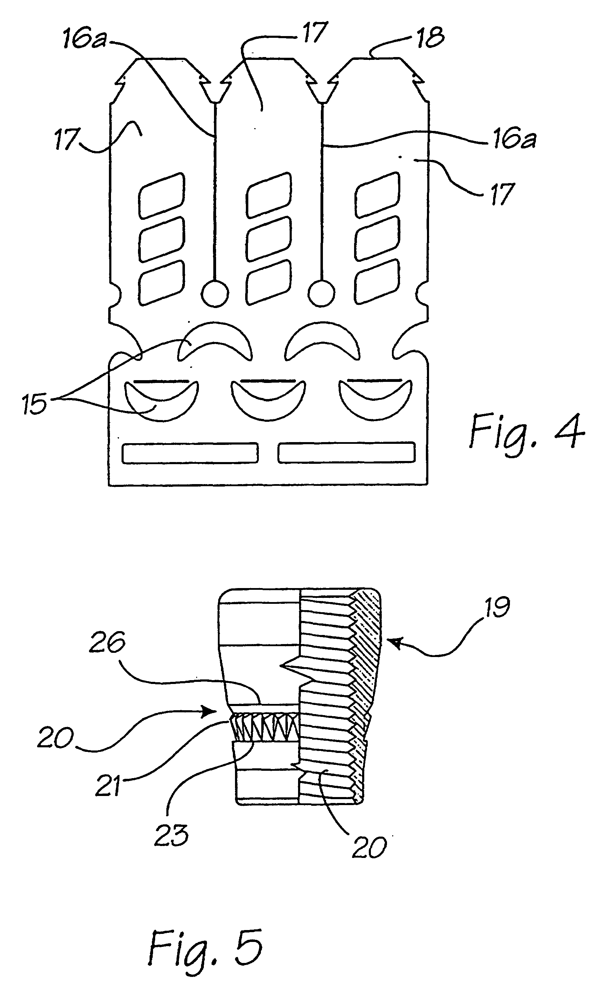

- Figur 4: eine abgewickelte Ansicht der Dübelhülse;
- Figur 5: eine teilweise geschnittene Ansicht des Spreizelements;
- Figuren 6 und 7: vergrößerte Ansichten eines Details der Dübelhülse
- Figuren 8 und 9: vergrößerte Ansichten einer ersten Variante des in den Figuren 6 und 7 gezeigten Details der Dübelhülse;
- Figuren 10 und 11: vergrößerte Ansichten einer zweiten Variante des in den Figuren 6 und 7 gezeigten Details der Dübelhülse.

Unter Bezugnahme auf die vorstehend erwähnten Zeichnungen, umfasst ein Spreizdübel eine Hülse 10 aus Metallblech mit einer Axialbohrung 11 zum Einführen einer Schraube 12.

An der Einführseite der Schraube 12 ist die Hülse 10 mit einer flachen Unterlegscheibe 13 versehen, die zweckmäßigerweise dazu geeignet ist, an den Kanten des (nicht dargestellten) Bohrlochs des zu befestigenden Objekts anzuliegen.

Die Hülse 10 hat ferner außen Vorsprünge 14, die Drehungen zwischen dem Dübel und den Wänden des Bohrlochs entgegenwirken, sowie Aussparungen 15.

Längsschlitze 16a und 16b teilen die Hülse 10 in spreizbare Abschnitte 17.

Die Schlitze 16a gehen von dem Ende 18 die Hülse 10 aus, mit dem diese in das entsprechende Bohrloch der Wand eingeführt wird, und enden jeweils an Löchern 16c.

Der mit 16b bezeichnete Schlitz dagegen ist durch die Wicklung des Metallblechs definiert, das die Hülse 10 bildet, und erstreckt sich daher über deren gesamte Länge.

In dem Ende 18 ist ein im wesentlichen kegeistumpfförmiges Spreizelement 19 mit der Hülse 10 verbunden, welches sich auf das Ende 18 zu verjüngt und eine mit einem Gewinde 18a versehene axiale Eingriffsbohrung für die Schraube 12 hat.

Gemäß der Erfindung hat das Spreizelement 19 ein ringförmiges Band 20, in dem eine Zahnung 21 und eine Schulter 23 ausgebildet sind, mit welchen gebogene Flügel 24 in Eingriff kommen, die an den Enden der Schlitze 16 an der Hülse 10 ausgebildet sind.

Der Eingriff in die Vertiefungen der Zahnung 21 und mit der Schulter 23 hat die Funktion, eine Rotation zu verhindern und eine axiale Kopplung gegen Verlieren herzustellen.

Genauer gesagt ist die Zahnung durch Rändeln oder Kordieren der Oberfläche des Spreizelements 19 ausgebildet, wodurch im wesentlichen pyramidenförmige Zähne erzeugt werden.

An dem der Schulter 23 abgewandten Ende des Bandes 20 hat das Spreizelement 19 eine Abschrägung 26 zum Eindringen in die Hülse 10.

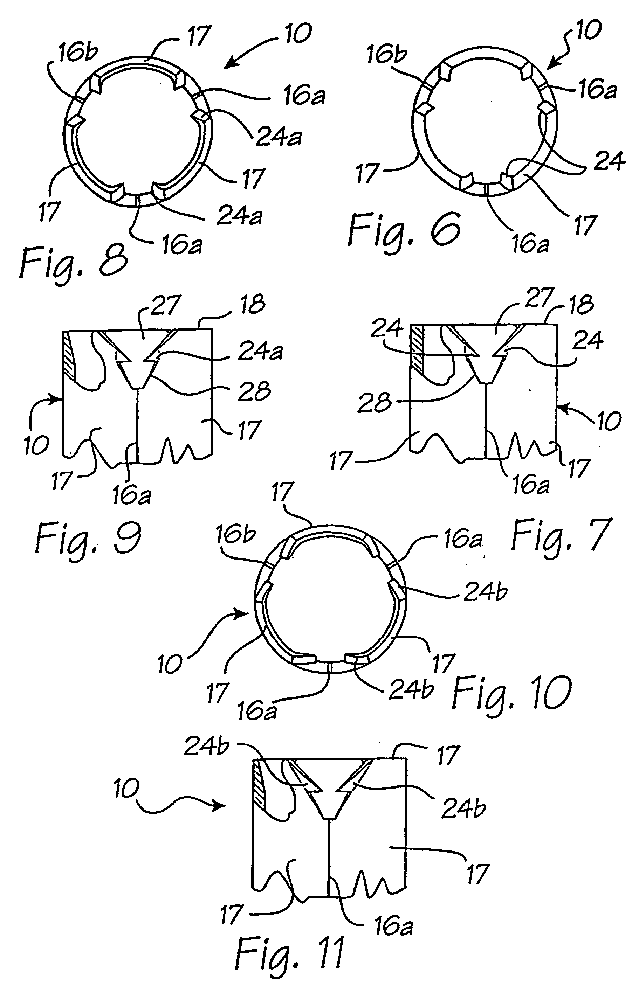

Die Flügel 24 ihrerseits sind an sich kegelförmig aufweitenden Mündungsbereichen 27 der Schlitze 16 angeordnet, haben die Form von spitzen Dreiecken und stehen von den Kanten 28 der Bereiche 27 ab. In einem ersten Fall (siehe Figuren 6 und 7) sind sie einfach entlang einer Linie parallel zur Achse des Dübels nach innen gebogen, um mit der Zahnung 21 und der Schulter 23 in Eingriff zu kommen.

Ein zweiter Fall (siehe Figuren 8 und 9) sieht vor, dass die Flügel, die hier mit dem Bezugszeichen 24a bezeichnet sind, an einer Linie parallel zur Achse des Dübels gebogen und geprägt sind, so dass ihre Stärke zu den jeweiligen Enden hin abnimmt, um das Eindringen des Spreizelements 19 in die Hülse 10 zu erleichtern.

Ein dritter Fall (siehe Figuren 10 und 11) sieht vor, dass die Flügel, hier mit 24b bezeichnet, an einer Linie gebogen sind, die bezüglich der Achse geneigt ist (wodurch sie weiter hervorstehen als bei den vorhergehenden Beispielen), und geprägt sind, so dass ihre Stärke zu den jeweiligen Enden hin abnimmt, um das Eindringen des Spreizelements 19 in die Hülse 10 zu erleichtern.

In der praktischen Anwendung hat sich gezeigt, dass die Aufgaben der vorliegenden Erfindung gelöst wurden.

Tatsächlich schließt die Ausbildung des gezahnten Bandes 20 und der Schulter 23, die mit den Flügeln 24 in Eingriff kommen, die Gefahr aus, dass sich die Hülse 10 nicht spreizt, weil die Druckfläche der gegenseitigen Verbindung gegenüber den bekannten Dübeln reduziert ist.

Zudem stellt die Realisierung der gegenseitigen Verbindung zwischen Spreizelement 19 und Hülse 10 am Ende der Hülse selbst sicher, dass eine größere Länge desselben die Wände des Bohrlochs berührt und mit dem Druck aus der Spreizung tiefere Bereiche erreicht, als es bei bekannten Dübeln der Fall ist, wodurch der Halt gegen Zug vergrößert wird (dieser betrifft nämlich einen ausgedehnteren Kegel des Materials außerhalb des Bohrlochs, normalerweise Beton).

Außerdem ist die Montage der Teile, manuell oder automatisch, dadurch erleichtert, dass das Vorhandensein des ringförmigen gezahnten Bandes 20 keine Probleme bei der gegenseitigen Positionierung oder Zentrierung mit den Flügeln 24 oder 24a hervorruft.

Schließlich kann der Dübel zu niedrigen Kosten hergestellt werden.

Die so konzipierte Erfindung kann zahlreiche Modifikationen und Änderungen erfahren, die alle im Rahmen des Erfindungskonzepts liegen.

In der praktischen Anwendung können alle verwendeten Materialien, so lange sie mit der speziellen Verwendung kompatibel sind, sowie die Abmessungen je nach Anforderungen frei gewählt werden.

## Patentansprüche

1. Spreizdübel mit einer Hülse (10) aus Metall zum Einführen einer Schraube (12), wobei die Hülse durch Längsschlitze (16) in spreizbare Abschnitte (17) unterteilt ist und wobei in das dem Ende zum Einführen der Schraube in die Hülse abgewandte Ende (18) ein im wesentlichen kegelstumpfförmiges Spreizelement (19) mit axialer Gewindebohrung für den Eingriff der Schraube (12) teilweise eingeführt ist, wobei das Spreizelement (19) ein ringförmiges Band (20) hat, in dem eine Zahnung (21) und eine Schulter (23) ausgebildet sind, **dadurch gekennzeichnet, dass** diese mit gebogenen Flügeln (24) in Eingriff kommen, die an der Hülse (10) an den Enden der Schlitze (16) ausgebildet sind.

2. Dübel nach Anspruch 1, **dadurch gekennzeichnet, dass** die Zahnung (21) durch Rändeln oder Kordieren der Oberfläche des Spreizelements (19) ausgebildet ist.

3. Dübel nach Anspruch 1, **dadurch gekennzeichnet, dass** die Flügel (24) an kegelförmig sich ausweitenden Mündungsbereichen (27) der Schlitze (16) angeordnet sind und die Form von spitzen Dreiecken haben, die von den Kanten (28) der Mündungsbereiche (27) abstehen.

4. Dübel nach Anspruch 3, **dadurch gekennzeichnet, dass** die Flügel (24) an einer Linie gebogen sind, die parallel zur Achse des Dübels ist.

5. Dübel nach Anspruch 3, **dadurch gekennzeichnet, dass** die Flügel (24) an einer Linie gebogen sind, die bezüglich der Achse des Dübels geneigt ist.

6. Dübel nach einem oder mehreren der vorhergehenden Ansprüche, **dadurch gekennzeichnet, dass** die Flügel (24) derart geprägt sind, dass ihre Stärke zu dem jeweiligen Ende hin abnimmt.

7. Dübel nach Anspruch 1, **dadurch gekennzeichnet, dass** das Spreizelement (19) an dem der Schulter (23) abgewandten Teil des gezahnten Bands (20) eine Abschrägung (26) hat.

## Claims

1. Expansible fixing plug having a metal sleeve (10) for the insertion of a screw (12), the sleeve being divided by longitudinal slots (16) into expansible zones (17) and there being partly inserted into the end (18) remote from the end for insertion of the screw into the sleeve a substantially truncated-cone-shaped expansion element (19) having an axial threaded bore for engagement with the screw (12), the expansion element (19) having a ring-shaped band (20) provided with teeth (21) and a shoulder (23), **characterised in that** the latter enter into engagement with bent wings (24) which are formed on the sleeve (10) at the ends of the slots (16).

2. Fixing plug according to claim 1, **characterised in that** the teeth (21) are formed by axial or diamond knurling of the surface of the expansion element (19).

3. Fixing plug according to claim 1, **characterised in that** the wings (24) are arranged on conically widening mouth regions (27) of the slots (16) and take the form of pointed triangles which project from the edges (28) of the mouth regions (27).

4. Fixing plug according to claim 3, **characterised in that** the wings (24) are bent along a line parallel to the axis of the fixing plug.

5. Fixing plug according to claim 3, **characterised in that** the wings (24) are bent along a line that is inclined with respect to the axis of the fixing plug.

6. Fixing plug according to one or more of the preceding claims, **characterised in that** the wings (24) are so formed by stamping that they decrease in thickness towards the respective end.

7. Fixing plug according to claim 1, **characterised in that** the expansion element (19) has a chamfer (26) on the portion of the toothed band (20) remote from the shoulder (23).

## Revendications

1. Cheville expansible avec une douille (10) en métal pour l'introduction d'une vis (12), dans laquelle la douille est subdivisée par une fente oblongue (16) en segments expansibles (17) et dans laquelle un élément expansible essentiellement en forme de tronc conique (19) est introduit partiellement dans l'extrémité (18) détournée vers l'extrémité pour l'introduction de la vis dans la douille, avec alésage fileté axial pour l'accrochage de la vis (12), dans laquelle l'élément expansible (19) a une bande en forme d'anneau (20), dans laquelle sont configurés une denture (21) et un épaulement (23), **caractérisé en ce que** celle-ci s'engrène avec des ailettes cintrées (24), qui sont configurées sur la douille (10) aux extrémités de la fente (16).

2. Cheville selon la revendication 1, **caractérisé en ce que** la denture (21) est configurée par moletage ou cordonnage de la surface supérieure de l'élément expansible (19).

3. Cheville selon la revendication 1, **caractérisé en ce que** les ailettes (24) sont disposées sur des domaines d'embouchure (27), s'évasant en forme de cône, de la fente (16) et ont la forme de triangles pointus qui sont éloignés des arêtes (28) des domaines d'embouchure (27).

4. Cheville selon la revendication 3, **caractérisé en ce que** les ailettes (24) sont cintrées sur une ligne qui est parallèle à l'axe de la cheville.

5. Cheville selon la revendication 3, **caractérisé en ce que** les ailettes (24) sont cintrées sur une ligne qui est inclinée par rapport à l'axe de la cheville.

6. Cheville selon une ou plusieurs des revendications précédentes, **caractérisé en ce que** les ailettes (24) sont gaufrées de telle sorte que leur force diminue à chaque extrémité.

7. Cheville selon la revendication 1, **caractérisé en ce que** l'élément expansible (19) a un chanfrein (26) sur la partie de la bande dentelée (20) détournée de l'épaulement (23).
